# EUROPEAN PATENT APPLICATION

(11) **EP 2 466 491 A1**
(43) Date of publication of application: **20.06.2012**
(21) Application number: 10195806.4
(22) Date of filing: 17.12.2010
(51) Int. Cl.: G06F 17/30

(54) **Website system and corresponding managing method, computer program product and non-transitory computer-readable carrier medium**

(71) Applicant: PHOTOBOX Limited, London West Midlands W2 1LA (GB)
(72) Inventor: Allen, Christopher, Ipswich, Suffolk IP10 0LZ (GB)
(74) Representative: Guéné, Patrick

(57) **Abstract**

It is proposed a website system for providing web services to a plurality of users (3), comprising a main website application (1) which is hosted by a set of active servers (11, 12) and has at its core a main relational database (13) to store user data associated with said plurality of users. The website system further comprises : at least one additional website application (2) which is an instance of the main website application and which is hosted by a set of additional active servers (21, 22) and has at its core an additional relational database (23); means (1) for assigning a given user to a given additional website application, through which the given user will access the website; means (1) for extracting, from the main relational database, user data associated with the given user; means (2) for migrating the extracted user data, from the main relational database to the additional relational database of the given additional website application; means (2) for detecting changes in the migrated user data, including creation of new user data, while the given user uses said given additional website application; and means (2) for writing back, from the additional relational database into the main relational database, at least a part of the detected changes.

## Description

### 1. FIELD OF THE INVENTION

The field of the invention is that of website systems.

More specifically, the invention pertains to a technique for providing web services to a plurality of users, using a website system comprising a main website application which has at its core a main relational database to store user data associated with said plurality of users

The present invention can be applied especially, but not exclusively, in the implementation of website systems for Internet e-commerce (e.g. the website of the company "Photobox" (registered trademark), offering on-line photo printing services).

However, the present invention can also be applied to any large scale website application which has at its core a relational database to store user and application data.

### 2. TECHNOLOGICAL BACKGROUND

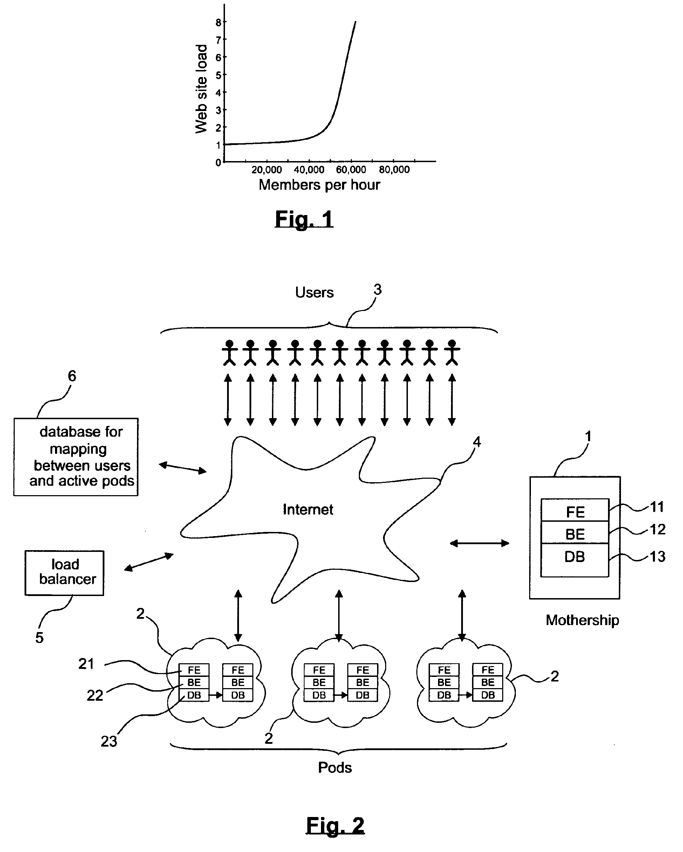

**Figure 1** is a graph representing, for a typical website, the website load in function of the number of members per hour. It describes the behaviour of a typical website, in terms of load, when subjected to high concurrent access by its users.

In the graph, website load is shown as the Unix or Linux (registered trademarks) average load value calculated for each web server. That is typically the average number of processes waiting for CPU resource at any given time.

In this example there is a slow linear growth in load as the user traffic level (i.e. the number of members per hour) increases. In other words, with moderate numbers of users the website responds well. However, when the amount of access reaches a certain tipping point (about 50.000 members per hour in figure 1) the load rises much more drastically or exponentially which results in very slow performance and ultimately an unusable website. In other words, there is a problem of scalability, performance and reliability exposed by this tipping point.

At present there is no industry-standard solution for this "tipping point problem", and organizations address it in different ways:
- some attempt to scale website systems vertically by utilising more powerful hardware;
- some invest time into optimisation of website application software;
- some invest in data sharding solutions (i.e. splitting data into different segments, each with its own database hardware).

However none of these existing solutions is satisfactory.

Vertical scaling addresses the "tipping point problem" by increasing the power of the physical hardware on which a website system is running. Such a solution is straightforward, but expensive, and only serves to postpone the need to address the underlying problem. It also quickly reaches limits beyond which you can't grow.

Optimisation of website application software is perhaps the most obvious path to follow (i.e. tracking the source of the "tipping point problem" and addressing it in software). Unfortunately this path is rarely straightforward. Tipping points as described above are often caused by complex conditions and tracking them down can be extremely difficult (and expensive). Once found, the only solution may be to re-architect the entire website system.

Data sharding (i.e. splitting databases by row) is the most promising solution that currently exists to the "tipping point problem". This procedure results in architectures that perform well and are fully horizontally scalable. Data sharding is considered to be state of the art at this time. However, this architecture is radically different to the monolithic website systems used by most large enterprises and any move to it may require a complex (and extremely high-risk) programme of changes. The development projects associated with data sharding are often long and expensive.

### 3. GOALS OF THE INVENTION

The invention, in at least one embodiment, is aimed especially at overcoming these different drawbacks of the prior art.

More specifically, it is a goal of at least one embodiment of the invention to provide a website system technique that represents a novel solution to the "tipping point problem".

It is also an aim of at least one embodiment of the invention to provide a website system technique offering an "infinitely scalable" solution where website load rises in a linear way with access rather than exponentially.

It is another goal of at least one embodiment of the invention to provide a website system technique which does not require to re-architect the entire website system, nor a total rewrite of the existing website application.

It is an additional goal of at least one embodiment of the invention to provide a website system technique that is simple to implement and costs little.

### 4. SUMMARY OF THE INVENTION

A particular embodiment of the invention proposes a website system for providing web services to a plurality of users, comprising a main website application which is hosted by a set of active servers and has at its core a main relational database to store user data associated with said plurality of users. Said website system further comprises :
- at least one additional website application which is an instance of said main website application and which is hosted by a set of additional active servers and has at its core an additional relational database;
- means for assigning a given user to a given additional website application, through which the given user will access the website;
- means for extracting, from said main relational database, user data associated with the given user;
- means for migrating the extracted user data, from said main relational database to the additional relational database of said given additional website application;
- means for detecting changes in the migrated user data, including creation of new user data, while said given user uses said given additional website application;
- means for writing back, from said additional relational database into said main relational database, at least a part of the detected changes.

The general principle is that of creating at least one additional website application, which is a "mini-version" of the main website application and which operates in tandem with the main website application. When a user is assigned to a specific additional website application, his data are migrated there. His data changes are written back to the main website application later, e.g. when loads allows.

There are three key advantages to this solution:
- infinite scalability (possibility of adding as many additional website applications as necessary to meet demand) without a total rewrite of the existing main website application logic;
- cost-reduction and cost-efficiency; and
- low-effort and low-risk scalability.

More detail on the advantages of the present solution is provided below:
- solves the "tipping point problem" by ensuring that such a tipping point is never reached ― so it becomes irrelevant. Such a website system will still have a "per-additional website application" tipping point but it can be addressed purely by adding further additional website applications;
- fully horizontally scalable, in the same way that data-sharded systems are with but without the complexity of re-architecting the existing main website application for sharding;
- low-risk solution (unlike sharding) ― acts as an addition to existing main website application systems, not a replacement for them;
- because additional website applications are distributed and independent (each is hosted by a specific set of additional of active servers), they offer an effective, low-risk failover solution for the main website application;
- environmentally-friendly architecture ― for example, when run in a computing cloud, resources may be added and removed dynamically as they are needed, which ultimately saves much of the electricity associated with keeping sufficient servers to meet peak demand powered up all of the time;
- aside from the research and development costs of the invention itself, the implementation of this invention represents a significant cost saving over conventional scaling techniques for large scale website applications. The conventional (prior art) model is to purchase enough web server hardware, database hardware, rack-space and electricity supply, sufficient for the peak period of year. Typically this large scale investment is made periodically throughout the year preceding each increase in customer activity. Once the investment is made the hardware is left switched on all the time, consuming rack-space and power and support overhead. With this invention we can reduce the core hardware used for the main website application, using less rack-space and electricity than with the aforesaid conventional model. Then additional website applications (and corresponding set of additional actives servers) are added only for the days when they are actually needed.

In a particular embodiment, the website system further comprises means for detecting a login action of said given user, and said means for assigning, extracting and migrating are activated in case said login action is detected.

Thus, on login, an instant migration allows the given user's data to be moved transparently from the main website application to an additional website application. The "log in" (i.e. "registration") action has been chosen as the point at which migration takes place because it is an action that all users of the website have to perform before they have full access to it.

In a particular embodiment, the website system further comprises means for checking that said given user fulfills at least one determined eligibility condition, and said means for assigning, extracting and migrating are activated in case said login action is detected and said at least one determined eligibility condition is fulfilled.

Thus not all users of the website are eligible for migration of their data to an additional website application. This allows to have an optimal use of the main website application, without reaching its tipping point.

In a particular embodiment, the website system further comprises at least one load balancer providing at least one functionality belonging to the group comprising;
- keeping, or obtaining from an external mapping database, an index of all users and, for each user, the website application through which he can access the website;
- directing the users to the website application to which they are assigned.

Thus the load balancer or load balancers allow some degree of indexing and control, which is desirable in most cases.

In a particular embodiment, said at least one load balancer comprises:
- means for decoding a stream received through a first secured connection between a user, previously assigned to an additional website application, and said at least one load balancer, in order to obtain a decoded stream ; and
- means for re-encoding said decoded stream, into an encoded to be transmitted through a second secured connection between said at least one load balancer and said additional website application.

This avoids each additional website application having its own secure certificate, while handling secure data (e.g. secure pages and payment data).

In a particular embodiment, the website system comprises at least two additional website applications, and means for monitoring the activity of all additional website applications.

This allows a monitoring of the overall website, even though certain users are distributed across one or several additional website applications (i.e. virtual website systems operating in tandem with the main website application).

In a particular embodiment, the website system comprises, for at least one given additional website application:
- a set of additional active servers, hosting said given additional website application and comprising an active front-end web server, an active back-end application server and an active database server; and
- at least a set of backup servers, replicating data changes from the set of additional active servers and comprising a backup front-end web server, a backup back-end application server and a backup database server.

Thus the user experience and data are preserved, even though a failure of the set of additional active servers occurs.

In a particular embodiment, the website system further comprises means for filtering said detected changes in order to keep necessary changes, and only necessary changes are written back into said main relational database by said means for writing back.

Thus this avoids moving around (from the additional website application to the main website application) large amounts of unchanged data unnecessarily.

In a particular embodiment, said means for writing back are activated with a low priority and/or while the main website application is available.

This approach means that during busy period for the main website application or if the main website application is unavailable, the additional website applications are out of synchronization with the main website application, but during quiet periods they catch up.

In a particular embodiment, said means for writing back comprise means for ensuring that, at a given periodic point in time, all of the user data from all additional website application or applications have return to the main website application.

Thus, at said given periodic point in time (e.g. midnight), the data are fully consistent in a single database and location, namely in the main relational database in the core of the main website application. This greatly simplifies downstream processing of that data, for example: distribution of new orders to factories or warehouses for fulfilment, overnight batch processing, reporting, financial reconciliation, customer services activity, etc.

By ensuring that user data are home in the main website application by a fixed time (e.g. midnight), this embodiment combines the best of both worlds: an infinitely scalable solution to allow users to use the website and access their data (only limited by the number of additional website applications that are activated at any one time) and limited impact on other internal systems dependent on user data.

In a particular embodiment, the website system further comprises means for blocking actions which depend on missing user data, i.e. user data associated with any user assigned to an additional website application but the changes of which have not yet been written back.

This allows to make allowance for user data which can be concerned by changes not yet written back.

In a particular embodiment, said means for writing back are also used for transmitting, from said additional website application towards said main website application, scheduled tasks to be treated by said main website application instead of said additional website application.

Thus these scheduled tasks are treated by the additional website applications as simple changes to data by users. This avoids to add to the complexity of the additional website applications.

In a particular embodiment, the website system further comprises means for repatriating a given user previously assigned to an additional website application, by assigning said given user to said main website application.

Repatriation of a user is the reverse of migration. The repatriation process simply flags the user as no longer being resident on the additional website application. This simplifies the management of the additional website application, avoiding that too many users stay assigned to it.

Another particular embodiment of the invention proposes a method for managing a website system in order to provide web services to a plurality of users, said website system comprising a main website application which is hosted by a set of active servers and has at its core a main relational database to store user data associated with said plurality of users. Said method comprises :
- assigning a given user to a given additional website application, through which the given user will access the website, said additional website application being an instance of said main website application and being hosted by a set of additional active servers and having at its core an additional relational database;
- extracting, from said main relational database, user data associated with the given user;
- migrating the extracted user data, from said main relational database to the additional relational database of said given additional website application;
- detecting changes in the migrated user data, including creation of new user data, while said given user uses said given additional website application;
- writing back, from said additional relational database into said main relational database, at least a part of the detected changes.

In another embodiment, the invention pertains to a computer program product comprising program code instructions for implementing the above-mentioned method (in any of its different embodiments) when said program is executed on a computer or a processor.

In another embodiment, the invention pertains to a non-transitory computer-readable carrier medium, storing a program which, when executed by a computer or a processor causes the computer or the processor to carry out the above-mentioned method (in any of its different embodiments).

### 5. LIST OF FIGURES

Other features and advantages of embodiments of the invention shall appear from the following description, given by way of an indicative and non-exhaustive examples and from the appended drawings, of which:
- Figure 1 is a graph representing, for a typical website, the website load in function of the number of members per hour;
- Figure 2 is a schematic illustration of a website system according to a particular embodiment of the invention, including a mothership, a plurality of pods and a load balancer (these elements are defined below);
- Figure 3 illustrates encapsulation of user data extracted from the mothership, in a particular embodiment of the invention;
- Figure 4 illustrates instant migration of encapsulated user data, from the mothership to one of the pods, in a particular embodiment of the invention;
- Figure 5 illustrates the functionalities of the load balancer, in a particular embodiment of the invention;
- Figure 6 illustrates pod redundancy, in a particular embodiment of the invention;
- Figure 7 illustrates writing back of data changes, from one of the pods to the mothership, in a particular embodiment of the invention;
- Figure 8 illustrates handling of secure pages and payment data, between a user and one of the pods, in a particular embodiment of the invention; and
- Figure 9 is a flowchart of a particular embodiment of the method according to the invention.

### 6. DETAILED DESCRIPTION

In all of the figures of the present document, identical elements and steps are designated by the same numerical reference sign.

### a) Presentation of the overall website system

The present invention relates to a website system, for providing web services to a plurality of users 3 through Internet 4 (or any other computer network that uses Internet Protocol technologies, e.g. an Intranet).

According to a particular embodiment of the invention, illustrated by **Figure 2**, the website system comprises:
- a main website application which is hosted by a set of active servers and has at its core a main relational database (also called "master database") to store user data associated with the plurality of users. The set of active servers comprises an active front-end web server (labelled "FE" and referenced 11), an active back-end application server (labelled "BE" and referenced 12) and an active database server (labelled DB and referenced 13). Hereinafter, the main website application and the corresponding set of active servers are all together called "mothership" and referenced 1;
- a plurality of additional website applications, each being an instance of the main website application, each being hosted by a set of additional active servers and each having at its core an additional relational database. The set of additional active servers comprises an additional active front-end web server (labelled "FE" and referenced 21), an additional active back-end application server (labelled "BE" and referenced 22) and an additional active database server (labelled DB and referenced 23). Hereinafter, each additional website application and the corresponding set of additional active servers are all together called "pod" and referenced 2. Each pod 2 is a complete replica of the mothership 1;
- a load balancer 5 (or several load balancers, as detailed below);
- a mapping database 6 for mapping between users and active pods. This mapping database 6 contains an index (or map) of the pods that are active, and which member is assigned to which pod. This mapping database 6 is referred to by the applications executing on the mothership 1 and the pods 2.

In an alternative embodiment, the mapping database 6 is not a stand-alone entity (e.g. in a computing cloud) but either is incorporated in the load balancer computer 5.

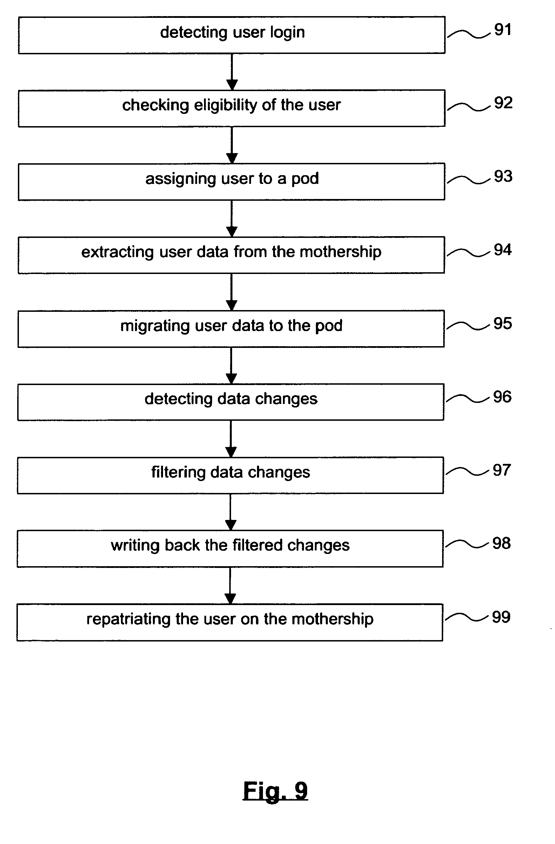

According to this particular embodiment of the invention, the website system also comprises means for carrying out a method for managing the website system (presented in detail here below with reference to figure 9), and more precisely:
^{*} the following means are performed by the application on the mothership 1 (or a dedicated hardware module comprised in the mothership 1) with reference to the mapping database 6:
   - means for assigning a given user 3 to a given pod 2, through which the given user will access the website;
   - means for extracting, from the main relational database comprised in the mothership 1, user data associated with the given user;
* the following means are performed by the application on the pods 2 (or a dedicated hardware module comprised in the pods 2) with reference to the mapping database 6:
   - means for migrating the extracted user data, from the main relational database (comprised in the mothership 1) to the additional relational database comprised in the given pod 2;
   - means for detecting changes in the migrated user data, including creation of new user data, while the given user uses the given pod 2 to access the website;
   - means for writing back, from the additional relational database (comprised in the given pod 2) into the main relational database (comprised in the mothership 1), at least a part of the detected changes.

All the entities (computers) of the website system (mothership 1, pods 2, users 3, load balancer 5 and mapping database 6) are connected through the Internet. In a particular embodiment, the pods 2, the load balancer 5 and the mapping database 6 exist in a computing cloud, and the mothership 1 exists in a proprietary data centre.

Hereinafter are presented some features detailing the operation of the website system when carrying out the aforesaid managing method.

### b) User data encapsulation

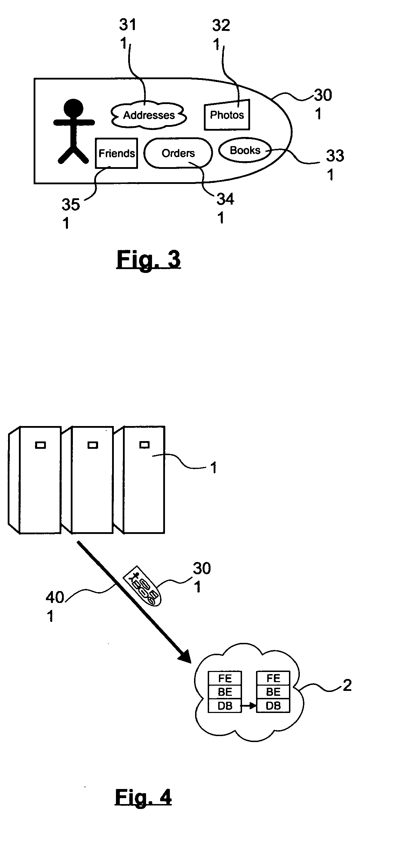

**Figure 3** illustrates encapsulation of user data 30 extracted from the mothership 1, in a particular embodiment of the invention.

This refers to the process of identifying which personal data is owned and required by a user of the website. These data (also called "encapsulated data") 30 are extracted from the "mothership" 1 and transmitted to the pod 2 through which the user will access the website.

The encapsulated data 30 comprise for example data relating to: addresses 31, photos 32, books 33, orders 34 and friends 35.

They are "bound" to the user and goes wherever he goes. The portability of these data 30 is a key element of the functionality of this invention.

At any given time, each pod only contains user data for those users that have been assigned to it. It does not have to contain user data for the millions of other users who are not associated with that specific pod.

### c) Instant migration of user data

**Figure 4** illustrates instant migration (represented by arrow referenced 40) of encapsulated user data 30, from the mothership 1 to one of the pods 2, in a particular embodiment of the invention.

Traditionally, the user data of a website are stored in a single monolithic database. This solution is not scalable for large datasets, and so many organisations have used the method of data sharding whereby data are split into parts and stored at different locations. This solution is scalable, but it is radically different to a monolithic solution, and organisations often find themselves in a situation where migration to the data sharding solution is impractical in terms of engineering effort and cost.

Instant migration provides a third alternative that is still scalable but far closer to the original monolithic solution. Data lives in a legacy database, but when a user requires access to the website, his entire "world" (i.e. all of his data 30 in this website) is duplicated and moved from the mothership 1 to a pod 2. This instant migration is performed extremely quickly, and the user is not aware that any such migration has taken place.

Once his data have been migrated, the user will see the data that he normally has access to, but all his interaction will be with the pod 2 and not with the mothership 1.

### d) Load balancer and gateway

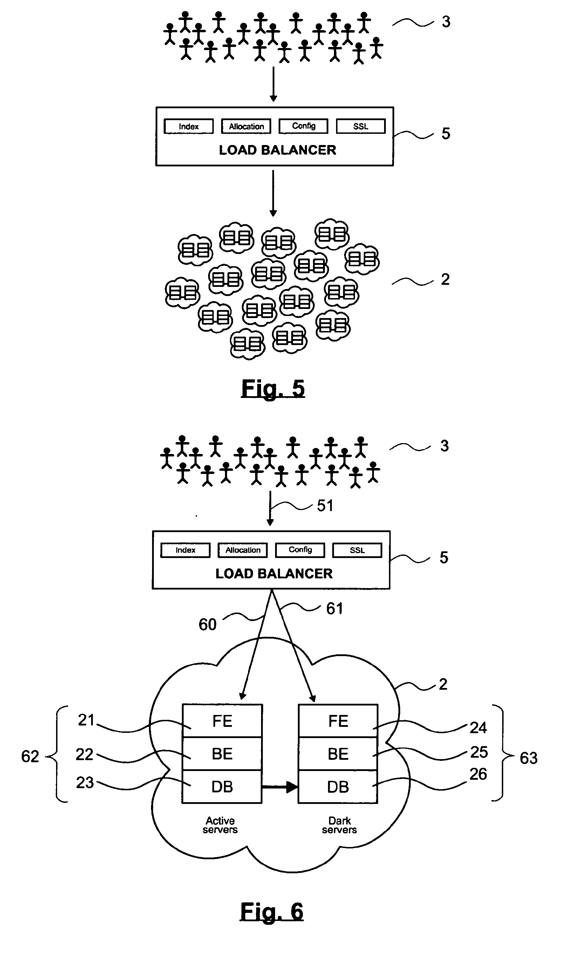

**Figure 5** illustrates the functionalities of the load balancer 5, in a particular embodiment of the invention (in which the mapping database 6 is incorporated in the load balancer computer 5).

A full website system according to the present invention may for example consist of tens of thousands of users 3 accessing hundreds of pods 2. Whilst it is possible for such pods to be completely autonomous, some degree of indexing and control is desirable in most cases.

This is the reason why a layer of control is added between the users 3 and the pods 2, by introducing one or more load balancers 5, which are servers providing the following functionalities:
- "index functionality": they keep an index of all users and their location;
- "allocation functionality": they direct users to their pods;
- "configuration functionality": they allow pods to be made up of server fail-over clusters (see discussion below);
- "SSL (Secure Sockets Layer) functionality": they allow tunnels to be created for secure data such as credit card details.

The load balancers 5 also allow pods to communicate securely with the mothership for data migration and data write back.

The website system comprises for example two load balancers: a primary, and a spare mirror, but any number of load balancers may be added to the website system to increase redundancy.

### e) Monitoring and logging of activity on pods

Since certain users are distributed across pods (i.e. virtual systems), the website system comprises, in a particular embodiment of the invention, means for monitoring the activity of the pods.

For example, a status page can be used to monitor all pod activity, comprising one row for each live pod. For each pod, the associated row comprises for example the following fields:
- name of the pod,
- server load (how hard it is working),
- memory usage,
- disk usage,
- timestamp,
- status indicator as to whether users are to be repatriated to the mothership,
- confirmation that the "write back" process is running,
- an indication of how many users are allocated to the pod,
- an indication of how many users are currently active,
- an indication of how many data items are yet to be written back to the mothership.

This status page allows to detect different problems. In the event of a detected problem, predetermined procedures are applied (e.g. restart a stopped server, restart a memory, restart a "write back process", reboot a pod, restart a "repatriation process", etc).

### f) Database ID management

Typical website systems store their data in a database with each record identified by a unique id. Such ids are assigned by the database ― and the database is the ultimate owner of ids. With a cloud-based system, as it is the case with a particular embodiment of the present invention (pods in the clouds), this control is not possible. Each pod must be autonomous and must be able to assign its own ids without reference to a central database. Three solutions can be considered to this problem.

### -i- Large id space

By assigning a very large id space (e.g. using string-based or 64 bit ids), each pod can apply its own signature to the ids it generated. This solution is simple and elegant. Unfortunately, such a simple solution is not possible if 32-bit signed integers are used.

### -ii- Centralised id server

The second solution considered is that of a centralised server in the cloud. Such a server makes occasional contact with the mothership, reserving large blocks of ids. It assigns these ids on request to pods that need them. This system functions acceptably, but it is a potential bottleneck and single point of failure because during normal usage, pods rely upon the id server, considerably reducing their autonomy and resilience.

### -iii- Local id server

The third solution considered is that of a local id server running directly on the pods. Once again, this server makes occasional contact with the mothership and reserves large blocks of ids (in many cases enough for an entire day's operation). The ids are made directly available to any process on the pods that need them.

This third solution, whilst less elegant than using a fully independent id space, it performs extremely well and is a good example of a bridge between the cloud (i.e. the pods) and an inflexible legacy system (i.e. the mothership).

### g) Pod redundancy

Pods (i.e. servers in the cloud) are liable to fail without warning. When such a failure occurs on a pod, preserving user experience and data must be a priority.

Therefore, and as illustrated in **Figure 6****,** in a particular embodiment of the invention each pod 2 actually consists of two (or possibly more) sets of servers: a set of active servers 62 and at least one set of dark servers 63. The active and dark sets of servers can be located each in a different physical location.

Each active (respectively dark) set of servers 62 (respectively 63) comprises an active (respectively dark) front-end web server 21 (respectively 24), an active (respectively dark) back-end application server 22 (respectively 25) and an active (respectively dark) database server 23 (respectively 26).

During normal use, the set of dark servers 63 is not used ― it simply replicates data changes from the set of active servers 6. If the set of active servers 62 goes offline or some other fault is detected with it, then the load balancer 5 switches all user activity to the set of dark servers 63 (this switch is represented by arrows referenced 60 and 61). Once done, the users and their data are instant-migrated to a new pod as soon as possible.

### h) Data exchanges (types and chronology) between pods and mothership

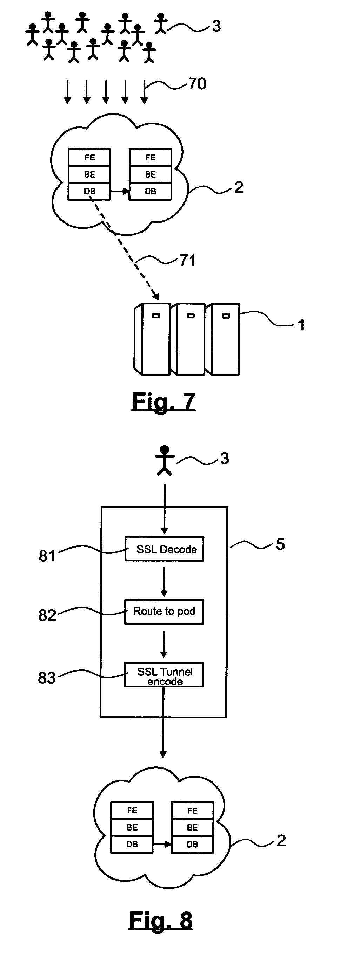

**Figure 7** illustrates writing back of data changes, from one of the pods 2 to the mothership 1, in a particular embodiment of the invention.

As already explained above, website systems typically use one of two models to store their data:
- either a monolithic database stores all data in the same place and is accessed by all users;
- or a sharded database splits data and stores them at distributed nodes.

The present invention takes a middle approach. The monolithic database remains the master repository of all data, but user data are temporarily migrated to autonomous pods 2 for the duration of the user's interaction with the website system. Of course this approach introduces a new problem: how to deal with data that the user has created or changed while using a pod ? A "reverse migration" is possible. However, in many cases it would involve moving around large amounts of unchanged data unnecessarily.

An alternative process, known as "write back", has been developed. All changes (represented by arrows referenced 70) made by a user while he is migrated to a pod are recorded. The changes are intelligently filtered to remove unnecessary data. For example, if a user adds an item to his virtual shopping basket and then removes it, no change is recorded. The recorded changes are then trickled back to the mothership 1 at a low priority. This write back action is represented by arrows referenced 71.

This approach means that during busy periods, the pods 2 will be out of synchronization with the mothership 1, but during quiet periods they will catch up.

This approach also has the advantage that if the mothership 1 is unavailable, the write back process can be suspended until the mothership becomes available again. Likewise if the mothership becomes overloaded, write back can be throttled back to reduce load.

Moreover, in a particular embodiment of the invention, the website system comprises means for ensuring that, at a given periodic point in time (e.g. midnight), all of the user data from all pods have returned to the mothership. The "write back" process makes easy to carry out this "Cinderella policy" (all data should be "home" (i.e. in the mothership) as soon after midnight as possible.

### i) Modifications required to the mothership application

An important advantage of the present invention over the prior art more radical sharding alternative (see discussion above) is the lack of change required to the core website application.

The additional website application which runs on each pod 2 is an instance of the main website application which runs on the mothership 1. In other words, the same website application runs on both pods and mothership, in a nearly identical form except notably the following changes:
- the main website application which runs on the mothership is able to trigger migrations to pods when conditions for doing so are fulfilled;
- the main website application which runs on the mothership blocks any actions which could change data belonging to migrated users. Such actions mainly consist of changes initiated by the back office part of the website system.
- the main website application which runs on the mothership blocks certain events that involve access to data shared by a plurality of users including at least on user migrated on a pod.

### j) Pod bootstrap, live and test

A pod (i.e. a set of servers in the cloud) is booted up with none of the normal certainties of a server in a data centre. It has a random IP address - both private and public, and that address may previously have been used for a completely different service. In a particular embodiment, each pods follows the following strict procedure at boot time:
- the pod reads a text string passed to it at boot time. This determines whether it is a "live" or "test" pod. Live pods join a live cluster, and connect to live payment gateways. Test pods connect to a test cluster, take test payments and enable a far higher level of logging.
- the pod reads the current IP address of it's load balancer from a fixed location in a secure storage.
- the pod connects to the load balancer, registers itself, and retrieves it's internet address ― e.g. "pod15.photobox.com".
- the pod downloads a template database from a fixed location in a secure storage.
- the pod starts to replicate system information from it's load balancer.
- the pod tells the load balancer that it is ready to receive customers.

A similar deregistration process takes place at pod shutdown.

### k) The writing of scheduled tasks back to the mothership

In common with many website applications, the website application which runs on each pod relies on a number of background "housekeeping" tasks (also called "scheduled tasks"), which are essential to service but are associated with low priority events. These events include:
- sending service emails to users, such as order confirmations and password changes;
- checking and changing the status or orders;
- validating data such as quotas.

Handling these scheduled tasks in the pods would add considerably to the complexity of pods, and would require authorisation of pods as email originators. Instead, all scheduled tasks are included in the write back data stream (which is sent from each pod to the mothership) and treated by the mothership as simple changes to data by users. As long as the data stream is written and processed in chronological order, all scheduled tasks will be scheduled correctly.

### l) Repatriation of members to the mothership

"Repatriation" is the reverse of migration. It is the return of users and their data to the mothership.

In a particular embodiment of the invention, pods are transient (i.e. they remain active for 24 hours or less). When a pod is closed down, it is essential that all user data have been synchronised with the mothership. Due to the write back model used, most of this synchronisation happens automatically.

After a certain period of inactivity, all changes made by a user will have been sent back from his pod to the mothership. However, even then, the system (as described by the index stored in the load balancers) will still consider the user to be resident on his pod. To complete the process, the repatriation process simply flags the user as no longer being resident on the pod. The next time the user accesses the website system he will be migrated afresh - probably to a different pod.

### -i- Inactivity Repatriation

Normally users are repatriated after they have been inactive for a certain time - 1 hour by default. A "repatriator" process runs constantly on each pod to check and perform the repatriation. The user inactivity time is read from the load balancer configuration and may be changed at any time - for example to repatriate all users quickly at the end of a day.

### -ii- Requested Repatriation

Sometimes it is necessary to repatriate a user under system control - for example to make a refund to his account from the back-office. For this reason, there exists a "repatriation queue" on the load balancer. This queue is read regularly by the repatriation process on each pod. Any users whose details are written to that queue will be repatriated safely once their data is written back to the mothership.

### -iii- Emergency Repatriation

Occasionally there is a need to repatriate users immediately even if their data is not up to date. For this reason there exists a "force repatriation" queue on the load balancer. Any users whose details are written to this queue will be repatriated immediately.

### m) Methods to replicate system table changes to each pod

In a particular embodiment, the mothership uses two types of database tables: "system tables" and "user tables". System tables contain data that are not modified by users, such as for example product details, prices, site content, and template data. User tables contain data that are modified by users, such as for example orders, photos, shopping baskets and addresses. When a pod first starts up it is loaded with a full copy of all system tables and a blank template for user tables.

In order to keep the system tables up to date, a database replication feed is taken from the mothership, to the load balancer, and from there to all pods. This feed immediately replicates any changes made in the back-office such as a price change or the introduction of a special offer. The feed is not a critical part of the overall website system - if it fails, the system will continue to operate albeit with the possibility that some system data may be out of date.

### n) Redirect on login or registration

One action that all users of the website have to perform before they have full access to the website is "log in" (also called "registration"). This action has therefore been chosen as the point at which migration takes place. On login, a user's eligibility is checked and if appropriate his data are migrated and they are redirected to the pod to which is assigned this user. In a particular embodiment, login is the only action that can cause migration from the mothership to a pod, and repatriation (discussed below) is the only action that can cause migration back from the pod to the mothership.

### o) Eligibility for migration to pod

In a particular embodiment, in order to allow the mothership (i.e. an inflexible legacy system) to become scalable with minimum disruption, not all users of the site are eligible for migration to pods. At login time, each user is examined and a yes/no decision is made about migration. For example, the following limits are imposed for a positive decision:
- user may not have more than 1,000 photos, 100 albums or 30 complex creations;
- user may not be the recipient of any shared albums;
- user may not have any currently pending orders.

Ineligible users simply fall through to standard use of the mothership.

### p) Handling of secure pages and secure certificates

**Figure 8** illustrates handling of secure pages and payment data, between a user 3 and a pod 2, in a particular embodiment of the invention.

Due to the transient nature of pods (servers in the cloud), handling of secure site pages and associated SSL certificates pose a particular problem. To avoid each pod having to own its own secure certificate, each secure connection is decoded by one of the load balancers 5 (step referenced 81), each having its own certificate. After an internal routing inside the load balancer 5 (step referenced 82), the connection is then reencoded by the load balancer 5 (e.g. using an SSL tunnel) (step referenced 83) and forwarded on to the pod 2.

This method also ensures that any secure data remains secure when they are transmitted inside the cloud, i.e. between the pods and the mothership. As such it is suitable for the handling of both secure pages and payment data (credit cards).

### q) Making allowances for data which hasn't arrived yet

At particularly busy times, synchronization of pods (i.e. the write back process) can lag a long way, meaning that the mothership doesn't recover the data changes immediately. It is then important that the mothership doesn't allow actions to be taken which depend on the missing data (i.e. the data not yet written back in the mothership). In particular, the mothership should not allow the following actions:
- any independent changes to the missing data;
- login by independent clients; and
- purges or housekeeping that might affect the missing data.

An "independent change" to the data is a direct change to the data stored on the Mothership - either by direct access to the main database by a system administrator, or by a remote computer program (such as a remote order processing system) - also known as an "independent client". Such remote clients access the mothership as part of their normal operations, and must be handled correctly.

According to a first alternative embodiment, the website system comprises means, activated when one of the aforesaid actions is detected, for forcing fast writing back of the missing data and/or means for forcing fast repatriation of the user associated with the missing data.

According to a second alternative embodiment, the website system comprises means, activated when one of the aforesaid actions is detected, for directing directly to the pods on which are stored given data (which are missing data for the mothership), any clients requiring access to these given (missing) data.

### r) Managing method

In a particular embodiment of the invention, illustrated by the flowchart of **Figure 9****,** the method for managing the website system of figure 2 comprises the following steps (all of which have already been detailed above):
- detecting (step 91) a given user's login action;
- checking (step 92) that this given user fulfills at least one determined eligibility condition;
   and in case the login action is detected and the at least one determined eligibility condition is fulfilled:
- assigning (step 93) the given user to a given pod, through which the given user will now access the website;
- extracting (step 94), from the pod, user data associated with the given user;
- migrating (step 95) the extracted user data, from the mothership to the pod;
- detecting (step 96) changes in the migrated user data, including creation of new user data, while the given user uses the pod to access the website;
- filtering (step 97) the detected data changes to remove the unnecessary changes;
- writing back (step 98), from the pod to the mothership, the filtered changes; and in case at least one repatriation condition is fulfilled:
- repatriating (step 99) the user to the mothership.

All the steps of the algorithm of figure 9 can be implemented equally well:
- by the execution of a set of computer instructions executed by a reprogrammable computing machine such as a server, a PC (personal computer), a DSP (a digital signal processor) or a microcontroller; or else
- by a dedicated hardware machine or component such as a FPGA (Field Programmable Gate Array), an ASIC (Application-Specific Integrated Circuit) or any other hardware module.

In case the algorithm is implemented in a reprogrammable computing machine, the corresponding program (i.e. the set of instructions) can be stored in a non-transitory computer-readable carrier medium that is detachable (for example a floppy disk, a CD-ROM or a DVD-ROM) or non-detachable.

Although the present disclosure has been described with reference to one or more examples, workers skilled in the art will recognize that changes may be made in form and detail without departing from the scope of the present invention.

## Claims

1. Website system for providing web services to a plurality of users (3), comprising a main website application (1) which is hosted by a set of active servers (11, 12) and has at its core a main relational database (13) to store user data associated with said plurality of users, **characterized in that** it further comprises :
- at least one additional website application (2) which is an instance of said main website application and which is hosted by a set of additional active servers (21, 22) and has at its core an additional relational database (23);
- means (1) for assigning a given user to a given additional website application, through which the given user will access the website;
- means (1) for extracting, from said main relational database, user data associated with the given user;
- means (2) for migrating the extracted user data, from said main relational database to the additional relational database of said given additional website application;
- means (2) for detecting changes in the migrated user data, including creation of new user data, while said given user uses said given additional website application;
- means (2) for writing back, from said additional relational database into said main relational database, at least a part of the detected changes.

2. Website system according to claim 1, **characterized in that** it further comprises means (1) for detecting a login action of said given user, and **in that** said means for assigning, extracting and migrating are activated in case said login action is detected.

3. Website system according to claim 2, **characterized in that** it further comprises means (1) for checking that said given user fulfills at least one determined eligibility condition, and **in that** said means for assigning, extracting and migrating are activated in case said login action is detected and said at least one determined eligibility condition is fulfilled.

4. Website system according to any one of the claims 1 to 3, **characterized in that** it further comprises at least one load balancer (5) providing at least one functionality belonging to the group comprising;
- keeping, or obtaining from an external mapping database (6), an index of all users and, for each user, the website application through which he can access the website;
- directing the users to the website application to which they are assigned.

5. Website system according to claim 4, **characterized in that** said at least one load balancer (5) comprises:
- means for decoding a stream received through a first secured connection between a user, previously assigned to an additional website application, and said at least one load balancer, in order to obtain a decoded stream ; and
- means for re-encoding said decoded stream, into an encoded to be transmitted through a second secured connection between said at least one load balancer and said additional website application.

6. Website system according to any one of the claims 1 to 5, **characterized in that** it comprises at least two additional website applications (2), and **in that** it further comprises means (5) for monitoring the activity of all additional website applications.

7. Website system according to any one of the claims 1 to 6, **characterized in that** it comprises, for at least one given additional website application:
- a set of additional active servers (21, 22, 23), hosting said given additional website application and comprising an active front-end web server, an active back-end application server and an active database server; and
- at least a set of backup servers (24, 25, 26), replicating data changes from the set of additional active servers and comprising a backup front-end web server, a backup back-end application server and a backup database server.

8. Website system according to any one of the claims 1 to 7, **characterized in that** it further comprises means (2) for filtering said detected changes in order to keep necessary changes, and **in that** only necessary changes are written back into said main relational database by said means for writing back.

9. Website system according to any one of the claims 1 to 8, **characterized in that** said means for writing back are activated with a low priority and/or while the main website application is available.

10. Website system according to any one of the claims 1 to 9, **characterized in that** said means for writing back comprise means for ensuring that, at a given periodic point in time, all of the user data from all additional website application or applications have return to the main website application.

11. Website system according to any one of the claims 1 to 10, **characterized in that** it further comprises means (1) for blocking actions which depend on missing user data, i.e. user data associated with any user assigned to an additional website application but the changes of which have not yet been written back.

12. Website system according to any one of the claims 1 to 11, **characterized in that** said means for writing back are also used for transmitting, from said additional website application towards said main website application, scheduled tasks to be treated by said main website application instead of said additional website application.

13. Website system according to any one of the claims 1 to 12, **characterized in that** it further comprises means (1) for repatriating a given user previously assigned to an additional website application, by assigning said given user to said main website application.

14. Method for managing a website system in order to provide web services to a plurality of users, said website system comprising a main website application which is hosted by a set of active servers and has at its core a main relational database to store user data associated with said plurality of users, said method being **characterized in that** it comprises :
- assigning (93) a given user to a given additional website application, through which the given user will access the website, said additional website application being an instance of said main website application and being hosted by a set of additional active servers and having at its core an additional relational database;
- extracting (94), from said main relational database, user data associated with the given user;
- migrating (95) the extracted user data, from said main relational database to the additional relational database of said given additional website application;
- detecting (96) changes in the migrated user data, including creation of new user data, while said given user uses said given additional website application;
- writing back (98), from said additional relational database into said main relational database, at least a part of the detected changes.

15. Computer program product **characterized in that** it comprises program code instructions for implementing the method according to claims 14, when said program is executed on a computer or a processor.

16. A non-transitory computer-readable carrier medium storing a program which, when executed by a computer or a processor causes the computer or the processor to carry out the method of transmitting according to claim 14.
